# EUROPEAN PATENT SPECIFICATION

(11) **EP 4 477 984 B1**
(45) Date of publication and mention of the grant of the patent: **25.03.2026**
(21) Application number: 24178457.8
(22) Date of filing: 28.05.2024
(51) Int. Cl.: F28F 9/02, F28F 7/02, B33Y 80/00

(54) **HEADER FOR DIRECTING FLUID TO AND FROM A HEAT EXCHANGER BODY**
KOPF ZUM LEITEN VON FLUID ZU UND VON EINEM WÄRMETAUSCHERKÖRPER
COLLECTEUR POUR DIRIGER UN FLUIDE VERS ET DEPUIS UN CORPS D'ÉCHANGEUR DE CHALEUR

(30) Priority: 01.06.2023 SE 2350676
(43) Date of publication of application: 18.12.2024
(73) Proprietor: Heatex AB, 215 32 Malmö (SE)
(72) Inventor: GIDNER, Johan, 227 63 Lund (SE); MANN, Alexander, 412 57 Göteborg (SE); HATAMI, Sepehr, 436 50 Hovås (SE); ENGELIN, Markus, 223 55 Lund (SE); ZEJNULLAHU, Arbias, 214 66 Malmö (SE)
(74) Representative: Ström & Gulliksson AB

(56) References cited:
- DE-A1- 102018 219 626
- US-A1- 2019 285 364
- US-A1- 2021 154 779
- US-A1- 2021 231 383
- US-B2- 10 583 535

## Description

### TECHNICAL FIELD

The disclosure relates to a header configured to direct fluid flow to and from a heat exchanger body, and a heat exchanger system comprising at least one such header and a fluid-to-fluid heat exchanger body. The disclosure also relates to a method of manufacturing a header or manufacturing a heat exchanger system comprising at least one header.

### BACKGROUND

Heat exchangers are used to transfer energy between outgoing and ingoing fluid flow in various applications such as ventilation, drying, cooling etc. The heat exchanger body comprises a plurality of channels arranged in a matrix, and often the inlet fluid flows through one set of channels in one direction, while the outlet fluid flows in a different set of channels in another direction, so-called cross-flow or counter-flow.

The inlet and the outlet sides of the heat exchanger body may each be connected to a header. A header is designed to distribute flow, i.e., redistribute fluid from a central source, such as a ventilation duct, to the channels of the heat exchanger body such that the fluid can be efficiently cooled or heated. A header can also be used to do the opposite, i.e., merge the previously distributed fluid into one central flow.

For example, US2019/285364 A1 discloses a flexible manifold adapted for use on a plate-fin heat exchanger core, the flexible manifold comprising a plurality of individual layers, each individual layer defining a lower floor, an upper floor, and two side walls. Each of the plurality of individual layers is adapted to channel a flow of a medium therethrough, each of the plurality of individual layers includes a plurality of vertical members, each of the plurality of vertical members extends vertically from the lower floor to the upper floor of the respective individual layer, and each of the plurality of vertical members is configured to provide structural support for the respective individual layer.

US 2021/231383 A1 discloses a fractal heat exchanger comprising a heat exchanger core
comprising a plurality of channels in a close-packed configuration, the plurality of channels comprising a plurality of first channels and a plurality of second channels; a first
fractal channel for conveying a first fluid to the plurality of first channels of the heat exchanger core; and a second fractal channel for conveying the first fluid from the plurality of first channels of the heat exchanger core; wherein the first fractal channel and the second fractal channel each comprise at least one divergence point along its length where a parent channel splits into a plurality of sub-channels which diverge away from each other.

US 2021/154779 A1 discloses a heat exchanger header including a primary fluid duct extending between a fluid port and a first branched region, a plurality of secondary fluid ducts fluidly connected to the primary fluid duct at the first branched region, wherein an
overhang region is formed laterally between adjacent ones of the plurality of secondary fluid ducts, and wherein each of the plurality of secondary fluid ducts extends between the first branched region and a second branched region, a plurality of tertiary fluid ducts fluidly connected to each of the plurality of secondary fluid ducts at the second branched
regions, a primary horn integrally formed with and extending from the overhang region, an at least one secondary horn integrally formed with and extending from one of the
plurality of tertiary fluid ducts, and a sacrificial support structure extending between the primary horn and the at least one secondary horn.

Problems associated with headers available today are that they have to be customized, i.e., designed for each specific application. The simple act of scaling a concept header up or down does not work. This makes the headers expensive and header production has long lead times.

Furthermore, header design is restricted by available manufacturing methods rather than by the desired functionalities. Headers and heat exchanger bodies are usually made in a conductive material and components are joined by welding, brazing, or gluing. Such joining is not only subject to leakage, but also requires complex fixture arrangements making the manufacturing process labor- and time-intensive. Furthermore, brazed designs provide limited flexibility since they have to be relatively simple, usually with a rectangular design.

US 10 583 535 B2 discloses a heat exchanger and a method for additively manufacturing
the heat exchanger. The heat exchanger includes a housing defining a heat exchange plenum having a first fluid inlet and a first fluid outlet separated along a transverse direction. A plurality of heat exchange banks pass through the heat exchange plenum between a top side and a bottom side of the housing substantially along a vertical direction, each of the heat exchange banks comprising a plurality of heat exchange tubes. A plurality of collector manifolds are positioned at the top side and the bottom side
of the housing, each collector manifold defining one or more connecting ports providing fluid communication between adjacent heat exchange banks.

DE 10 2018 219626 A1 discloses a heat exchanger for a motor vehicle with an additively manufactured heat exchanger block. The heat exchanger block has several fluid channels which are arranged one above the other in the stacking direction. The fluid channels can be alternately flowed through by two fluids in the stacking direction, so that the two fluids can transfer heat to each other via a wall. In the heat exchanger, a fluid inlet and a fluid outlet are formed for the respective fluid, which are each fluidically connected to the fluid channels for the respective fluid. In at least one of the fluid channels a plurality of fluid guide elements are formed, which are fixed on both sides to the respective adjacent walls and whose longitudinal axes are aligned in the stacking direction. The fluid guide elements in the respective fluid channel form flow paths which are designed to distribute the respective fluid from the fluid inlet to the cross section of the respective fluid channel and/or to collect the respective fluid from the cross section of the respective fluid channel to the fluid outlet.

### SUMMARY

It is an object to provide an improved header for directing flow to and from a heat exchanger body. The foregoing and other objects are achieved by the features of the independent claims. Further implementation forms are apparent from the dependent claims, the description, and the figures.

According to a first aspect, there is provided a header configured to direct fluid flow to and from a heat exchanger body, wherein the header comprises an inlet/outlet section comprising an array of throughgoing slits, a forking section comprising a matrix of throughgoing channels arranged in a plurality of rows and a plurality of columns, and a housing partially enclosing the inlet/outlet section and the forking section, a first part of the forking section being directly connected to the inlet/outlet section at an interface, such that each throughgoing slit is fluidly connected to throughgoing channels from at least two rows and at least two columns, a second part of the forking section being configured such that each throughgoing channel of the matrix comprises at least one partition wall dividing the throughgoing channel into at least two sub-channels, each sub-channel being configured to fluidly connect with one cell of the heat exchanger body.

This solution allows a main flow to be distributed evenly, firstly across narrow sits, thereafter across smaller channels, and lastly across even smaller sub-channels, or the other way around. This facilitates improved thermal transfer, low weight, and low pressure drop. The division, or forking, of the slits into channels reduces the thermal boundary build-up by dividing the main flow into multiple paths, increasing the heat transfer between the channels. Such a partially forked header allows a highly efficient cell-type heat exchanger body. **In** fact, this type of header facilitates a heat exchanger body design of any desired configuration. Furthermore, this solution prevents dirt and debris from clogging the header since the section farthest away from the heat exchanger body has larger openings, which openings are easier to clean should it be necessary.

In a possible implementation form of the first aspect, the center axis of each row extends in one row plane, all row planes extending in parallel, and the center axis of each column extends in one column plane, all column planes extending in parallel, the row planes extending perpendicular to the column planes. This allows the header to be connected to a conventional cell-type heat exchanger body.

In a further possible implementation form of the first aspect, the partition wall extends along one of the center axes, further improving flow distribution and, hence, heat transfer across the header.

In a further possible implementation form of the first aspect, the longitudinal axis of each throughgoing slit extends in a slit plane, all slit planes extending in parallel with each other and the column planes. This facilitates a simple and compact header suitable for substantially linearly directed main flow of the counter-flow type.

In a further possible implementation form of the first aspect, the inlet/outlet section comprises a plurality of parallel first hollow fins arranged in an inlet portion of the inlet/outlet section, each pair of adjacent first hollow fins being separated by one throughgoing slit, and a plurality of parallel second hollow fins arranged in an outlet portion of the inlet/outlet section, each pair of adjacent second hollow fins being separated by one throughgoing slit, the first hollow fins and the second hollow fins being offset such that an apex of each first hollow fin aligns with a throughgoing slit of the outlet portion, and an apex of each second hollow fin aligns with a throughgoing slit of the inlet portion. The use of hollow fins allows different fluid flow paths to be interwoven such that the header can be made as compact as possible. Furthermore, this configuration allows each incoming fluid flow to be smoothly and evenly distributed across the header.

In a further possible implementation form of the first aspect, each first hollow fin and each second hollow fin comprises two or more at least partially arched surfaces, the two or more surfaces being interconnected at the apex, each surface forming a boundary of one throughgoing slit. This is an aerodynamic/hydrodynamic shape that allows fluid to pass smoothly since there is little fluid resistance.

In a further possible implementation form of the first aspect, the inlet portion and the outlet portion are separated by a flow dividing structure, the first hollow fins and the second hollow fins being interconnected with the flow dividing structure, the interconnection between each second hollow fin and the flow dividing structure comprising an opening, the opening allowing a first fluid flow between an interior of the second hollow fin and one throughgoing slit of the inlet portion, and the interconnection between each first hollow fin and the flow dividing structure comprising an opening, the opening allowing a second fluid flow between an interior of the first hollow fin and one throughgoing slit of the outlet portion. This facilitates a compact and stable header providing even heat distribution.

In a further possible implementation form of the first aspect, each first and second hollow fin is configured such that the interior of the first and second hollow fin widens from the apex in a direction towards the forking section and towards the flow dividing structure. This kind of hollow fin structure is aerodynamic/hydrodynamic both externally and internally such that first fluid flow as well as second fluid flow is smooth and unobstructed.

In a further possible implementation form of the first aspect, the throughgoing channels of one column are arranged such that every second channel receives the first fluid flow and the remaining channels of the column receive second fluid flow, and wherein the throughgoing channels of one row are arranged such that every second channel receives the first fluid flow and the remaining channels of the row receive the second fluid flow. This arrangement not only facilitates an even flow distribution but also improves the energy transfer rate since any slow-moving boundary layer is broken by the channel arrangement.

In a further possible implementation form of the first aspect, at least one interior wall surface of the throughgoing channel has a structured surface, increasing the surface, and hence the heat transfer, area.

In a further possible implementation form of the first aspect, the inlet/outlet section comprises first support structures, each first support structure extending from the apex of one first hollow fin or one second hollow fin in a direction away from the forking section. This facilitates the manufacture of headers having complex shapes and reinforces the inlet/outlet section.

In a further possible implementation form of the first aspect, the inlet/outlet section comprises second support structures, each second support structure extending from the surface of one first hollow fin or one second hollow fin in a direction towards the interface, the second support structure interconnecting with a wall of one throughgoing channel at the interface.

In a further possible implementation form of the first aspect, the header is manufactured by means of additive manufacturing, the inlet/outlet section and the forking section of the header being manufactured as one integral piece. Additive manufacturing enables customization of the header volume and shape, and a design that is based on function and application rather than manufacturability. This, in turn, allows for new header designs which may improve the overall performance of the heat exchanger system comprising the header. Furthermore, additive manufacturing facilitates minimizing the size and weight of the heat transfer elements as well as reducing the number of components, minimizing the need for assembly. Additionally, the relatively higher surface roughness of additive manufacturing increases the heat transfer surface area. Since there is no joining of separate components, the risk of leakage is minimized if not completely avoided.

According to a second aspect, there is provided a heat exchanger system comprising a fluid-to-fluid heat exchanger body and at least one header according to the above, the heat exchanger body comprising a first fluid path and a second fluid path, the header being configured to direct fluid flow to the first fluid path and from the second fluid path, or to direct fluid flow from the first fluid path and to the second fluid path, respectively.

This system allows a main flow to be distributed evenly, firstly across narrow sits, thereafter across smaller channels, across even smaller sub-channels, and lastly across the heat exchanger body, or the other way around. This facilitates improved thermal transfer, low weight, and low pressure drop. The gradual division, or forking, reduces the thermal boundary build-up by dividing the main flow into multiple paths, increasing the heat transfer between the channels. Such a partially forked header allows the system to comprise a highly efficient cell-type heat exchanger body. **In** fact, this type of header facilitates a heat exchanger body design of any desired configuration. Additionally, the heat exchanger body and header(s) can be manufactured and/or assembled as one integral piece.

**In** a further possible implementation form of the second aspect, the first fluid path is configured to receive the first fluid flow of the header and the second fluid path is configured to receive the second fluid flow of the header. This allows continuous flow across headers, or headers and heat exchanger body.

**In** a further possible implementation form of the second aspect, the header and/or the heat exchanger body has an at least partially non-linear shape, such that the first fluid path of the header, the second fluid flow of the header, the first fluid path of the heat exchanger body, and/or the second fluid path of the heat exchanger body extend non-linearly in at least one plane. This allows suitable transitions between, e.g., ventilation duct and heat exchange system, as well as adaptations to other existing components such as electronics.

In a further possible implementation form of the second aspect the header and/or heat exchanger body comprises metal and/or polymer material, increasing manufacturing flexibility by allowing optimization, e.g., in view of weight and heat transfer.

According to a third aspect, there is provided a method of manufacturing a header or a heat exchanger system comprising a fluid-to-fluid heat exchanger body and at least one header, the header comprising an inlet/outlet section comprising an array of throughgoing slits, a forking section comprising a matrix of throughgoing channels arranged in a plurality of rows and a plurality of columns, and a housing partially enclosing the inlet/outlet section and the forking section, the forking section being directly connected to the inlet/outlet section at an interface such that each throughgoing slit is fluidly connected to throughgoing channels from at least two rows and at least two columns, and a second part of the forking section being configured such that each throughgoing channel of the matrix comprises at least one partition wall dividing the throughgoing channel into at least two sub-channels, each sub-channel being configured to fluidly connect with one cell of the heat exchanger body, the method comprising producing the header by means of additive manufacturing, and optionally producing the heat exchanger body by means of additive manufacturing.

Additive manufacturing enables customization of the volume and shape of the heat exchanger system or header, and a design that is based on function and application rather than manufacturability. This, in turn, allows for new designs which may improve the overall performance of the heat exchanger system. Furthermore, additive manufacturing facilitates minimizing the size and weight of the heat transfer elements as well as a reduction of the number of components, minimizing the need for assembly. Additionally, the relatively higher surface roughness of additive manufacturing increases the heat transfer surface area. Since there is no joining of separate components, the risk of leakage is minimized if not completely avoided.

In a possible implementation form of the third aspect, the method comprises producing the inlet/outlet section of the header, starting from a first end of the inlet/outlet section,
producing the forking section of the header from a free end of the inlet/outlet section, and optionally producing the heat exchanger body from a free end of the forking section. This allows a complete heat exchanger system to be manufactured as one integral piece.

In a possible implementation form of the third aspect, the method further comprises producing a second header by means of additive manufacturing, the method comprising producing a forking section of the second header starting from a free end of the heat exchanger body, and producing an inlet/outlet section of the second header starting from a free end of the forking section. This allows a complete heat exchanger system including two headers to be manufactured as one integral piece.

In a further possible implementation form of the third aspect, the method further comprises a step of producing a support structure configured to facilitate the production of the inlet/outlet section of the header. This facilitates the manufacture of complex headers using different printing methods.

In a further possible implementation form of the third aspect, the method further comprises a step of producing a second support structure configured to facilitate the production of the forking section starting from the inlet/outlet section. This facilitates the manufacture of complex headers using different printing methods.

This and other aspects will be apparent from the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 shows a partial, exploded view of a heat exchanger system in accordance with an example of the embodiments of the disclosure;
Fig. 2 shows a perspective view of a header in accordance with an example of the embodiments of the disclosure;
Fig. 3 shows a wire-frame side view of a header in accordance with an example of the embodiments of the disclosure;
Fig. 4 shows a wire-frame perspective view of a header in accordance with an example of the embodiments of the disclosure;
Fig. 5a shows a rear view of a header in accordance with an example of the embodiments of the disclosure;
Fig. 5b shows a detail view of a section of the header shown in Fig. 5a;
Fig. 6a shows a front view of a header in accordance with an example of the embodiments of the disclosure;
Fig. 6b shows a detail view of a section of the header shown in Fig. 5a;
Fig. 7 shows a wire-frame side view of a heat exchanger system in accordance with an example of the embodiments of the disclosure.

### DETAILED DESCRIPTION

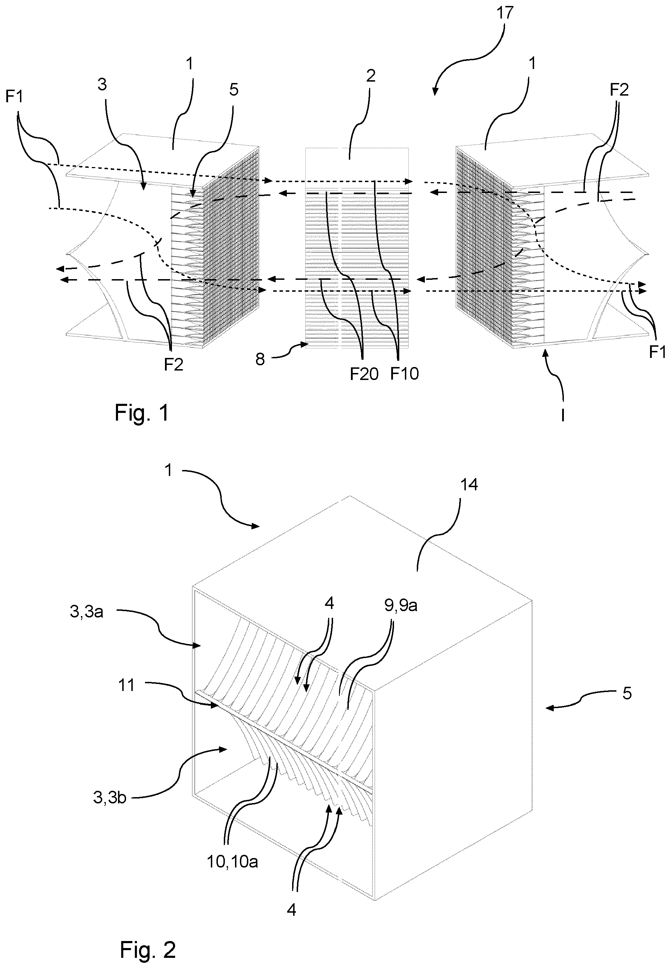

The present invention relates to a heat exchanger system 17 comprising a fluid-to-fluid heat exchanger body 2 and at least one header 1, the header being described in more detail further below. The heat exchanger body 2 comprises a first fluid path F10 and a second fluid path F20, as illustrated in Fig. 1. The fluid paths F10, F20 travel through cells 8, presumably fluid paths F10 travel through half of the cells 8 and fluid paths F20 through the rest.

The heat exchanger body 2 comprises a first section and a second section and each header 1 is in fluid communication with one of the first section and the second section. The first section comprises an inlet for a first fluid and an outlet for a second fluid, while the second section comprises an outlet for the first fluid and an inlet for the second fluid.

The first fluid and the second fluid may be a liquid or a gas such as air. The first fluid and the second fluid may both be liquid, both be gas, or one fluid may be liquid and the other fluid gas. The first fluid may be indoor air and the second fluid may be outdoor air.

Fig. 1 shows a heat exchanger system 17 comprising a first header 1 and a second header 1, the first header 1 being arranged in fluid communication with the first section of the heat exchanger body 2 and the second header 1 correspondingly being arranged in fluid communication with the second section of the heat exchanger body 2. When in use, each fluid enters an inlet portion of the first header 1, passes through the heat exchanger body 2, and exits through an outlet portion of the second header 1.

The header 1, or two headers 1 as illustrated in Fig. 1, is configured to direct fluid flow to and from the first fluid path F10 and the second fluid path F20. In other words, the first fluid path F10 may be configured to receive a first fluid flow F1 of the header 1 and the second fluid path F20 may be configured to receive a second fluid flow F2 of the header 1. The fluid paths F10, F20 as well as first fluid flow F1 and second fluid flow F2 may be directed in different directions, forming a counter-flow or cross-flow. The fluid paths F10, F20 and fluid flows F1, F2 may enter and exit the heat exchanger system 17 in the same half of the system, i.e. substantially travel only in the right half or the left half of the system. The fluid paths F10, F20 and fluid flows F1, F2 may enter and exit the heat exchanger system in different halves of the system, as shown in Fig. 1, such that the flow travels across the heat exchanger body 2, i.e. from the right half to the left half as shown by arrows.

The header and/or heat exchanger body may comprise metal and/or polymer material, increasing manufacturing flexibility by allowing optimization, e.g., in view of weight and heat transfer.

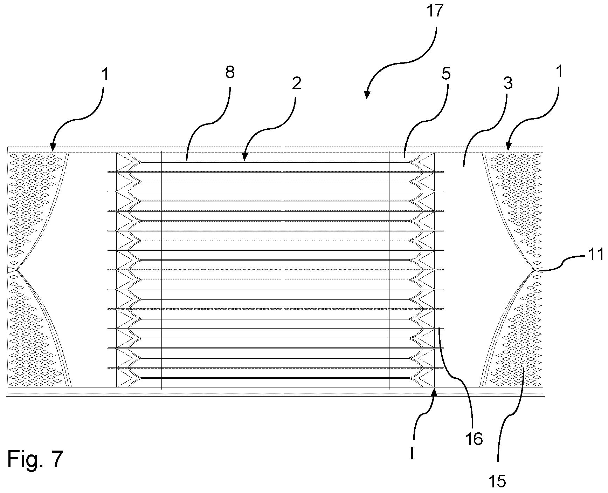

Figs. 1 and 7 show linear, i.e. straight, heat exchanger systems 17, however, the header 1 and/or the heat exchanger body 2 may have an at least partially non-linear shape, such that the first fluid path F10 of the header 1, the second fluid flow F2 of the header 1, the first fluid path F10 of the heat exchanger body 2, and/or the second fluid path F20 of the heat exchanger body 2 extend non-linearly in at least one plane. The header 1 and/or the heat exchanger body 2 may for example be curved to accommodate existing components such as electronics or to follow the extent of a ventilation system.

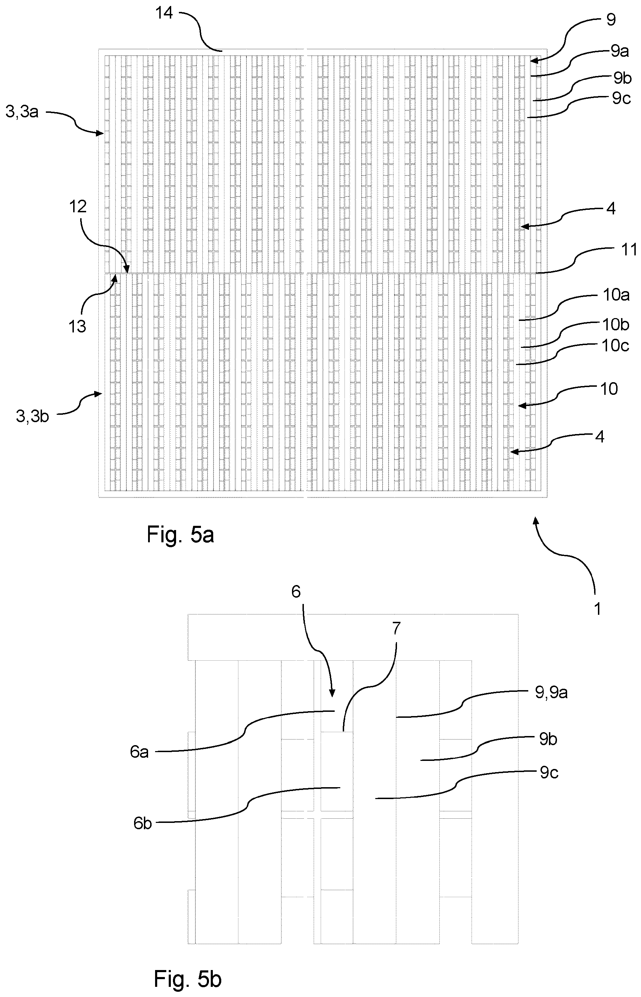

The header 1 is configured to direct fluid flow to and from the heat exchanger body 2. The header 1 comprises an inlet/outlet section 3 comprising an array of throughgoing slits 4, as illustrated in Figs. 2, 5a, and 5b. By "array" is meant a row of substantially identical slits. The slits are significantly longer than wide.

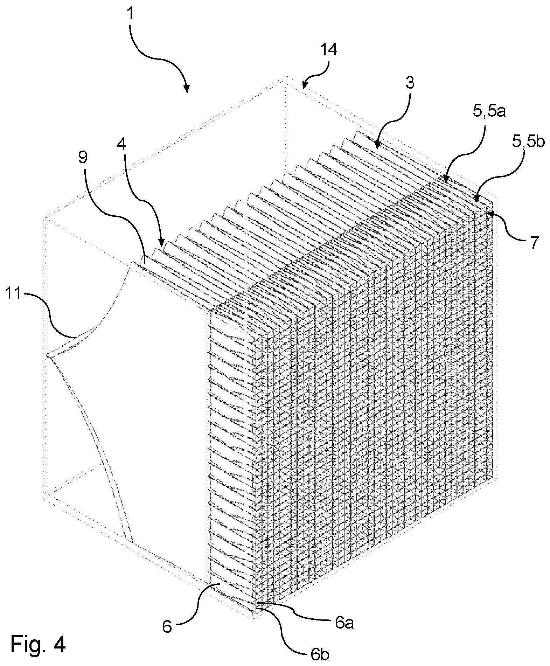

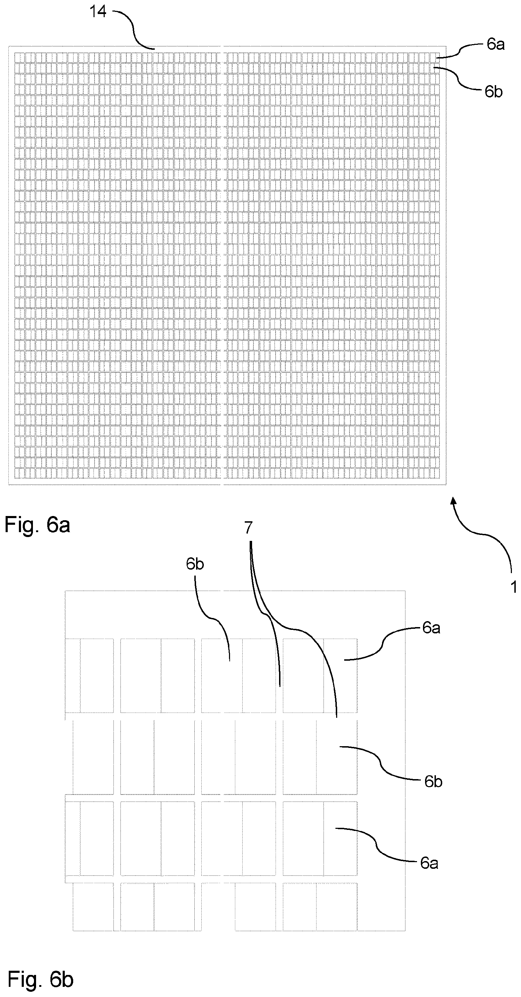

The header 1 also comprises a forking section 5 comprising a matrix of throughgoing channels 6 arranged in a plurality of rows and a plurality of columns, as illustrated in Figs. 4, 6a, and 6b. The forking section 5 comprises a first part 5a and a second part 5b. By "matrix" is meant a grid formed by several rows and several columns of substantially identical channels 6.

In other words, the center axis of each row may extend in one row plane, while all row planes extend in parallel. Correspondingly, the center axis of each column may extend in one column plane, while all column planes extend in parallel. As shown in Figs. 5a and 6a, the row planes may extend perpendicular to the column planes. The partition wall 7 may extend along one of the center axes. The longitudinal axis of each throughgoing slit may extend in a slit plane, all slit planes extending in parallel with each other and the column planes as shown in Fig. 5a.

A housing 14 partially encloses the inlet/outlet section 3 and the forking section 5. The housing 14 may have any suitable shape, nevertheless, a first opening of the housing 14 allows access to the inlet/outlet section 3 and a second opening of the housing 14 allows access to the forking section 5.

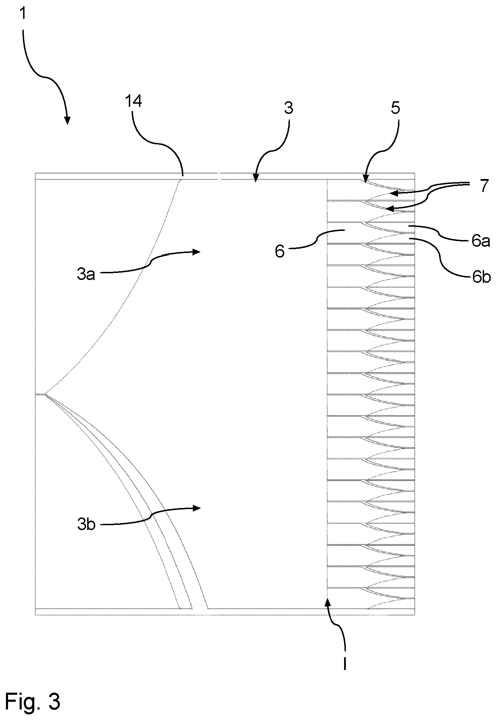

As illustrated in Fig. 3, the first part 5a of the forking section 5 is directly connected to the inlet/outlet section 3 at an interface I such that each throughgoing slit 4 is fluidly connected to throughgoing channels 6 from at least two rows and at least two columns. Fig. 5a shows each throughgoing slit 4 being fluidly connected to two columns of throughgoing channels 6 as well as 10 rows of throughgoing channels 6. In other words, interface I comprises the transition from throughgoing slits 4 to throughgoing channels 6. Interface I extends in an interface plane, the interface plane may extend substantially perpendicular to the slit planes and to the row planes.

The second part 5b of the forking section 5 is configured such that each throughgoing channel 6 of the matrix comprises at least one partition wall 7 dividing the throughgoing channel 6 into at least two sub-channels 6a, 6b. Fig. 6a shows a total of 20 rows of throughgoing channels 6 being divided into 40 rows of sub-channels 6a, 6b. Each sub-channel 6a, 6b is configured to fluidly connect with one cell 8 of the heat exchanger body 2. The cells 8 and sub-channels 6a, 6b may be rectangular. The channels 6 may also be rectangular, though of a larger size.

The inlet/outlet section 3 may comprise a plurality of parallel first hollow fins 9 arranged in an inlet portion 3a of the inlet/outlet section 3, each pair of adjacent first hollow fins 9 being separated by one throughgoing slit 4. The inlet/outlet section 3 may correspondingly comprise a plurality of parallel second hollow fins 10 arranged in an outlet portion 3b of the inlet/outlet section 3, each pair of adjacent second hollow fins 10 being separated by one throughgoing slit 4. The fins may also be described as foils. The inlet portion 3a and the outlet portion 3b may be stacked on top of each other, as suggested in the Figures, however, they may be arranged relative each other in any suitable way, e.g. side-by-side.

The first hollow fins 9 and the second hollow fins 10 may be offset such that an apex 9a of each first hollow fin 9 aligns with a throughgoing slit 4 of the outlet portion 3b, and an apex 10a of each second hollow fin 10 aligns with a throughgoing slit 4 of the inlet portion 3a, as shown in Fig. 5a.

Each first hollow fin 9 and each second hollow fin 10 may comprise two or more at least partially arched surfaces 9b, 9c; 10b, 10c, the two or more surfaces 9b, 9c; 10b, 10c being interconnected at the apex 9a, 10a, as illustrated in Figs. 4 to 5b. Each surface 9b, 9c, 10b, 10c forms a boundary of one throughgoing slit 4. The first hollow fin 9 and the second hollow fin 10 may comprise of one or several arched surfaces or one or several straight surfaces together forming an arc.

The inlet portion 3a and the outlet portion 3b may separated by a flow dividing structure 11, see for example Figs. 2 and 5a which show a thin and flat, plate-shaped flow dividing structure 11, and Fig. 7 which shows a thicker, tapering and substantially triangular flow dividing structure 11. Such a shape facilitates the attachment of ducts. The flow dividing structure 11 may have any suitable shape.

As illustrated in Fig. 5a, the first hollow fins 9 and the second hollow fins 10 are interconnected with the flow dividing structure 11, the interconnection between each second hollow fin 10 and the flow dividing structure 11 comprising an opening 12, the opening 12 allowing first fluid flow F1 between an interior of the second hollow fin 10 and one throughgoing slit 4 of the inlet portion 3a. Correspondingly, the interconnection between each first hollow fin 9 and the flow dividing structure 11 comprises an opening 13, the opening 13 allowing second fluid flow F2 between an interior of the first hollow fin 9 and one throughgoing slit 4 of the outlet portion 3b.

Each first and second hollow fin 9, 10 may be configured such that the interior of the first and second hollow fin 9, 10 widens from the apex 9a, 10a in a direction towards the forking section 5 and towards the flow dividing structure 11. In other words, each first and second hollow fin 9, 10 has a pointy top, i.e. apex 9a, 10a, and widens from the pointy top towards a base, similar to the shape of a shark fin. The
The distance between surfaces 9a and 9b, and 10a and 10b, increases such that a hollow space is formed within each fin 9,10, the hollow space of each fin receiving one fluid flow while the other fluid flow is received in the slits 4 separating the fin 9, 10 from adjacent fins 9, 10. In other words, the hollow fin 9,10 comprises an internal groove for passing, and directing, fluid flow. As shown in Fig. 2, inlet portion 3a comprises a number of slits 4 accommodating first fluid flow F1 while the hollow spaces, i.e. interior, of fins 9 accommodate second fluid flow F2. Correspondingly, outlet portion 3b comprises a number of slits 4 accommodating second fluid flow F2 while the hollow spaces of fins 10 accommodate first fluid flow F1. The inlet and outlet portions 3a, 3b may be reversed.

Surfaces 9a and 9b, and 10a and 10b, may extend at an angle of between -45° and +45° to the slit plane or column plane.

The throughgoing channels 6 of one column of the forking section 5 are arranged such that every second channel receives the first fluid flow F1 and the remaining channels of the column receive the second fluid flow F2. Correspondingly, the throughgoing channels 6 of one row of the forking section 5 are arranged such that every second channel receives the first fluid flow F1 and the remaining channels of the row receive the second fluid flow F2. In other words, the throughgoing channels 6 are arranged to alternatingly receive first fluid flow F1 and second fluid flow F2. This allows a large number of surfaces facilitating heat transfer between differently directed flows.

At least one interior wall surface of the throughgoing channel 6 may have a structured surface. This facilitates breaking up laminar boundary flow occurring adjacent the walls of the throughgoing channels 6. Other surfaces such as partition walls 7 and surfaces 9b, 9c, 10b, 10c may also be structured for the same reasons.

The inlet/outlet section 3 may comprise first support structures 15, as shown in Fig. 7. Each first support structure 15 extends from the apex 9a, 10a of one first hollow fin 9 or one second hollow fin 10 in a direction away from the forking section 5.

The inlet/outlet section 3 may comprise second support structures 16, as also shown in Fig. 7. Each second support structure 16 extends from the surface 9b, 9c; 10b, 10c of one first hollow fin 9 or one second hollow fin 10 in a direction towards the interface I. The second support structure 16 may have a wall-shape and be configured to interconnect with a wall of one throughgoing channel 6 at the interface I, preferably a wall extending parallel with the slit planes. The wall-shaped second support structure 16 may have a slanted surface extending from the surface 9b, 9c, 10b, 10c towards the top of the wall of the throughgoing channel 6.

At interface I, the walls of the throughgoing channels 6 which extend parallel to the row planes may comprise cutouts, e.g. V-shaped cutouts. The legs of the V may e.g. be separated by 60°. The cut-out eliminates the need for additional support structures since the wall has a self-supporting shape (as opposed to a straight edge which would have needed support).

The support structures 15, 16 may be used as reinforcement or as starting point for the production of the header 1.

The header 1 may be manufactured by means of additive manufacturing, the inlet/outlet section 3 and the forking section 5 of the header 1 being manufactured as one integral piece. Any suitable type of additive manufacturing may be used, such as stereolithography (SLA) 3D printing, selective laser melting (SLM), or selective powder deposition (SPD).

The present invention also relates to a method of manufacturing a header 1 or a heat exchanger system 17 comprising a a fluid-to-fluid heat exchanger body 2 and at least one header 1. As described above, the header 1 comprises an inlet/outlet section 3 comprising an array of throughgoing slits 4, a forking section 5 comprising a matrix of throughgoing channels 6 arranged in a plurality of rows and a plurality of columns,and a housing 14 partially enclosing the inlet/outlet section 3 and the forking section 5. The forking section 5 is directly connected to the inlet/outlet section 3 at an interface I such that each throughgoing slit 4 is fluidly connected to throughgoing channels 6 from at least two rows and at least two columns. The second part 5b of the forking section 5 is configured such that each throughgoing channel 6 of the matrix comprises at least one partition wall 7 dividing the throughgoing channel 6 into at least two sub-channels 6a, 6b, each sub-channel 6a, 6b being configured to fluidly connect with one cell 8 of the heat exchanger body 2.

The method comprises producing the header 1 by means of additive manufacturing. Optionally, the method also comprises producing the heat exchanger body 2 by means of additive manufacturing. The header 1 may be produced as a separate module to be later connected to a heat exchanger body 2 by means of e.g. surface heating, glue, foil, welding or powder used for additive manufacturing. Manufacturing the header 1 separately may be advantageous since, in such case, the heat exchanger body 2 could be produced using cheaper technology. Nevertheless, the header 1 and heat exchanger body 2 may also be produced as one complete, integral piece, which minimizes the risks of leakage or erroneous assembly.

Additive manufacturing allows the header 1 or heat exchanger system 17 to be provided with any desired interface for connecting to a specific customer environment, such as snap functions for locking the header 1 or heat exchanger system 17 into place making them easy to mount. Furthermore, brackets for fitting filters may also be an integral part of the header 1 or heat exchanger system 17. The shape and size of the header 1 or heat exchanger system 17 is easily adapted to sitespecific conditions.

The method may comprise firstly producing the inlet/outlet section 3 of the header 1, starting from a first end of the inlet/outlet section 3, and secondly producing the forking section 5 of the header 1 from a free end of the inlet/outlet section 3. Optionally, the heat exchanger body 2 may be produced from a free end of the forking section 5.

The method may further comprise producing a second header 1 by means of additive manufacturing, in which case the method comprises producing a forking section 5 of the second header 1, starting from a free end of the heat exchanger body 2, and producing an inlet/outlet section 3 of the second header 1, starting from a free end of the forking section 5. Figs. 1 and 7 show embodiments which comprise one heat exchanger body 2 and two headers 1 arranged at opposite sides of the heat exchanger body 2. When producing the entire heat exchanger system 16 as one integral piece, one may start producing from what will be a first end of an inlet/outlet section 3 of a first header 1, and stop when reaching a second end of an inlet/outlet section 3 of a second header 1.

The method may further comprise a step of producing the first support structure 15, the first support structure 15 being configured to facilitate the production of the inlet/outlet section 3 of the header 1. For example, when using resin printing methods such as stereolithography (SLA) 3D printing, or metal printing methods such as selective laser melting (SLM), it may be required to also print a first support structure 15 on the build platform of the 3D printing machine. The first support structure 15 is printed first, before the other features, or simultaneously with the other features. The first support structure 15 is used as a starting point for printing the remainder of the header 1, in particular features which, without the first support structure 15, could be "hanging mid-air", for example the apexes 9a, 10a when initiating the printing from the free end of inlet/outlet section 3 (see the left-most end of the header 1 in Fig. 3).

When printing from the free end of forking section 5 (see the right-most end of the header 1 in Fig. 3), it would not be necessary to use such a support structure 15 since all sub-channels 6a, 6b and partition walls 7 start from the build platform. Similarly, when using powder deposition there is no need for support structures 15, 16 for the sake of production. Nevertheless, the support structures 15, 16 may also be useful for reinforcing the header 1 when necessary.

The method may further comprise a step of producing a second support structure 16, the second support structure 16 being configured to facilitate the production of the forking section 5 starting from the inlet/outlet section 3. Corresponding to that mentioned just above, it may be necessary to print a second support structure 16 depending on the printing method used. The second support structure 16 is used as a starting point for printing the forking section 5, in particular features which, without the second support structure 16, could be "hanging mid-air", for example walls of sub-channels 6a, 6b or partition walls 7. The second support structure 16 is printed before, or simultaneously as, the printing of the forking section 5. This step would be initiated after producing the inlet/outlet section 3 but before producing the forking section 5.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. A header (1) configured to direct fluid flow to and from a heat exchanger body (2), wherein said header (1) comprises:
- an inlet/outlet section (3) comprising an array of throughgoing slits (4),
- a forking section (5) comprising a matrix of throughgoing channels (6) arranged in a plurality of rows and a plurality of columns, and
- a housing (14) partially enclosing said inlet/outlet section (3) and said forking section (5),
-- a first part (5a) of said forking section (5) being directly connected to said inlet/outlet section (3) at an interface (I), such that
each throughgoing slit (4) is fluidly connected to throughgoing channels (6) from at least two rows and at least two columns,
-- a second part (5b) of said forking section (5) being configured such that each throughgoing channel (6) of said matrix comprises at least one partition wall (7) dividing said throughgoing channel (6) into at least two sub-channels (6a, 6b),
each sub-channel (6a, 6b) being configured to fluidly connect with one cell (8) of said heat exchanger body (2).

2. The header (1) according to claim 1, wherein said inlet/outlet section (3) comprises
a plurality of parallel first hollow fins (9) arranged in an inlet portion (3a) of said inlet/outlet section (3), each pair of adjacent first hollow fins (9) being separated by one throughgoing slit (4), and
a plurality of parallel second hollow fins (10) arranged in an outlet portion (3b) of said inlet/outlet section (3), each pair of adjacent second hollow fins (10) being separated by one throughgoing slit (4),
said first hollow fins (9) and said second hollow fins (10) being offset such that an apex (9a) of each first hollow fin (9) aligns with a throughgoing slit (4) of said outlet portion (3b), and an apex (10a) of each second hollow fin (10) aligns with a throughgoing slit (4) of said inlet portion (3a).

3. The header (1) according to claim 2, wherein each first hollow fin (9) and each second hollow fin (10) comprises two or more at least partially arched surfaces (9b, 9c; 10b, 10c), said two or more surfaces (9b, 9c; 10b, 10c) being interconnected at said apex (9a, 10a), each surface (9b, 9c, 10b, 10c) forming a boundary of one throughgoing slit (4).

4. The header (1) according to claim 2 or 3, wherein said inlet portion (3a) and said outlet portion (3b) are separated by a flow dividing structure (11), said first hollow fins (9) and said second hollow fins (10) being interconnected with said flow dividing structure (11),
the interconnection between each second hollow fin (10) and said flow dividing structure (11) comprising an opening (12), said opening (12) allowing a first fluid flow (F1) between an interior of said second hollow fin (10) and one throughgoing slit (4) of said inlet portion (3a), and
the interconnection between each first hollow fin (9) and said flow dividing structure (11) comprising an opening (13), said opening (13) allowing a second fluid flow (F2) between an interior of said first hollow fin (9) and one throughgoing slit (4) of said outlet portion (3b).

5. The header (1) according to any one of claims 2 to 4, wherein each first and second hollow fin (9, 10) is configured such that said interior of said first and second hollow fin (9, 10) widens from said apex (9a, 10a) in a direction towards said forking section (5) and towards said flow dividing structure (11).

6. The header (1) according to claim 4 or 5, wherein the throughgoing channels (6) of one column are arranged such that every second channel receives said first fluid flow (F1) and the remaining channels of said column receive said second fluid flow (F2), and
wherein the throughgoing channels (6) of one row are arranged such that every second channel receives said first fluid flow (F1) and the remaining channels of said row receive said second fluid flow (F2).

7. The header (1) according to any one of the previous claims, wherein at least one interior wall surface of said throughgoing channel (6) has a structured surface.

8. The header (1) according to claim 2 and optionally any one of claims 3 to 7, wherein said inlet/outlet section (3) comprises first support structures (15), each first support structure (15) extending from the apex (9a, 10a) of one first hollow fin (9) or one second hollow fin (10) in a direction away from said forking section (5).

9. The header (1) according to claim 2 and optionally any one of claims 3 to 8, wherein said inlet/outlet section (3) comprises second support structures (16), each second support structure (16) extending from the surface (9b, 9c; 10b, 10c) of one first hollow fin (9) or one second hollow fin (10) in a direction towards said interface (I), said second support structure (16) interconnecting with a wall of one throughgoing channel (6) at said interface (I).

10. The header (1) according to any one of the previous claims, wherein said header (1) is manufactured by means of additive manufacturing, said inlet/outlet section (3) and said forking section (5) of said header (1) being manufactured as one integral piece.

11. A heat exchanger system (17) comprising a fluid-to-fluid heat exchanger body (2) and at least one header (1) according to any one of claims 1 to 10, said heat exchanger body (2) comprising a first fluid path (F10) and a second fluid path (F20),
said header (1) being configured to direct fluid flow to said first fluid path (F10) and from said second fluid path (F20), or to direct fluid flow from said first fluid path (F10) and to said second fluid path (F20), respectively.

12. The heat exchanger system (17) according to claim 11, wherein said header (1) and/or said heat exchanger body (2) has an at least partially non-linear shape, such that the first fluid path (F10) of said header (1), the second fluid flow (F2) of said header (1), said first fluid path (F10) of said heat exchanger body (2), and/or said second fluid path (F20) of said heat exchanger body (2) extend non-linearly in at least one plane.

13. A method of manufacturing a header (1) or a heat exchanger system (17) comprising a fluid-to-fluid heat exchanger body (2) and at least one header (1),
said header (1) comprising an inlet/outlet section (3) comprising an array of throughgoing slits (4), a forking section (5) comprising a matrix of throughgoing channels (6) arranged in a plurality of rows and a plurality of columns, and a housing (14) partially enclosing said inlet/outlet section (3) and said forking section (5),
a first part (5a) of said forking section (5) being directly connected to said inlet/outlet section (3) at an interface (I) such that each throughgoing slit (4) is fluidly connected to throughgoing channels (6) from at least two rows and at least two columns, and
a second part (5b) of said forking section (5) being configured such that each throughgoing channel (6) of said matrix comprises at least one partition wall (7) dividing said throughgoing channel (6) into at least two sub-channels (6a, 6b), each sub-channel (6a, 6b) being configured to fluidly connect with one cell (8) of said heat exchanger body (2),
wherein said method comprises:
- producing said header (1) by means of additive manufacturing, and optionally
- producing said heat exchanger body (2) by means of additive manufacturing.

14. The method according to claim 13, wherein said method comprises:
- producing said inlet/outlet section (3) of said header (1), starting from a first end of said inlet/outlet section (3),
- producing said forking section (5) of said header (1) from a free end of said inlet/outlet section (3), and, optionally
- producing said heat exchanger body (2) from a free end of said forking section (5).

15. The method according to claim 14, further comprising producing a second header (1) by means of additive manufacturing, said method comprising
- producing a forking section (5) of said second header (1), starting from a free end of said heat exchanger body (2), and
- producing an inlet/outlet section (3) of said second header (1), starting from a free end of said forking section (5).

16. The method according to claim 14 or 15, further comprising a step of producing a first support structure (15) configured to facilitate the production of said inlet/outlet section (3) of said header (1).

17. The method according to any one of claims 14 to 16, further comprising a step of producing a second support structure (16) configured to facilitate the production of said forking section (5) starting from said inlet/outlet section (3).

## Patentansprüche

1. Verteilerstück (1), das konfiguriert ist, eine Fluidströmung zu und von einem Wärmeaustauschkörper (2) zu lenken, wobei das Verteilerstück (1) umfasst:
- einen Einlass-/Auslassabschnitt (3), der eine Anordnung von durchgehenden Schlitzen (4) umfasst,
- einen Gabelungsabschnitt (5), der eine Matrix von durchgehenden Kanälen (6) umfasst, die in mehreren Reihen und mehreren Spalten angeordnet sind, und
- ein Gehäuse (14), das den Einlass-/Auslassabschnitt (3) und den Gabelungsabschnitt (5) teilweise umschließt,
- wobei ein erster Teil (5a) des Gabelungsabschnitts (5) unmittelbar mit dem Einlass-/Auslassabschnitt (3) an einer Schnittstelle (1) verbunden ist, so dass
jeder durchgehende Schlitz (4) mit durchgehenden Kanälen (6) von mindestens zwei Reihen und mindestens zwei Spalten fluidtechnisch verbunden ist,
- ein zweiter Teil (5b) des Gabelungsabschnitts (5) derart konfiguriert ist, dass jeder durchgehende Kanal (6) der Matrix mindestens eine Partitionswand (7) umfasst, die den durchgehenden Kanal (6) in mindestens zwei Unterkanäle (6a, 6b) unterteilt,
wobei jeder Unterkanal (6a, 6b) konfiguriert ist, sich mit einer Zelle (8) des Wärmeaustauschkörpers (2) fluidtechnisch zu verbinden.

2. Verteilerstück (1) nach Anspruch 1, wobei der Einlass-/Auslassabschnitt (3) umfasst:
mehrere parallele erste hohle Finnen (9), die in einem Einlassteil (3a) des Einlass-/Auslassabschnitts (3) angeordnet sind, wobei jedes Paar benachbarter erster hohler Finnen (9) durch einen durchgehenden Schlitz (4) getrennt ist, und
mehrere parallele zweite hohle Finnen (10), die in einem Auslassteil (3b) des Einlass-/Auslassabschnitts (3) angeordnet sind, wobei jedes Paar benachbarter zweiter hohler Finnen (10) durch einen durchgehenden Schlitz (4) getrennt ist,
wobei die ersten hohlen Finnen (9) und die zweiten hohlen Finnen (10) derart versetzt sind, dass ein Scheitelpunkt (9a) jeder ersten hohlen Finne (9) auf einen durchgehenden Schlitz (4) des Auslassteils (3b) ausgerichtet ist und ein Scheitelpunkt (10a) jeder zweiten hohlen Finne (10) auf einen durchgehenden Schlitz (4) des Einlassteils (3a) ausgerichtet ist.

3. Verteilerstück (1) nach Anspruch 2, wobei jede erste hohle Finne (9) und jede zweite hohle Finne (10) zwei oder mehr zumindest teilweise gebogene Flächen (9b, 9c; 10b, 10c) umfasst, wobei die zwei oder mehr Flächen (9b, 9c; 10b, 10c) an dem Scheitelpunkt (9a, 10a) miteinander verbunden sind, wobei jede Fläche (9b, 9c; 10b, 10c) eine Grenze eines durchgehenden Schlitzes (4) bildet.

4. Verteilerstück (1) nach Anspruch 2 oder 3, wobei der Einlassteil (3a) und der Auslassteil (3b) durch eine Strömungsunterteilungsstruktur (11) getrennt sind, wobei die ersten hohlen Finnen (9) und die zweiten hohlen Finnen (10) mit der Strömungsunterteilungsstruktur (11) verbunden sind,
wobei die Verbindung zwischen jeder zweiten hohlen Finne (10) und der Strömungsunterteilungsstruktur (11) eine Öffnung (12) umfasst, wobei die Öffnung (12) eine erste Fluidströmung (F1) zwischen einem Inneren der zweiten hohlen Finne (10) und einem durchgehenden Schlitz (4) des Einlassteils (3a) erlaubt und
die Verbindung zwischen jeder ersten hohlen Finne (9) und der Strömungsunterteilungsstruktur (11) eine Öffnung (13) umfasst, wobei die Öffnung (13) einen zweiten Fluidstrom (F2) zwischen einem Inneren der ersten hohlen Finne (9) und einem durchgehenden Schlitz (4) des Auslassteils (3b) erlaubt.

5. Verteilerstück (1) nach einem der Ansprüche 2 bis 4, wobei jede erste und jede zweite hohle Finne (9, 10) derart konfiguriert sind, dass sich das Innere der ersten und der zweiten hohlen Finne (9, 10) von dem Scheitelpunkt (9a, 10a) in Richtung des Gabelungsabschnitts (5) und in Richtung der Strömungsunterteilungsstruktur (11) verbreitert.

6. Verteilerstück (1) nach Anspruch 4 oder 5, wobei die durchgehenden Kanäle (6) einer Spalte derart angeordnet sind, dass jeder zweite Kanal die erste Fluidströmung (F1) empfängt und die verbleibenden Kanäle der Spalte die zweite Fluidströmung (F2) empfangen, und
wobei die durchgehenden Kanäle (6) einer Reihe derart angeordnet sind, dass jeder zweite Kanal die erste Fluidströmung (F1) empfängt und die verbleibenden Kanäle der Reihe die zweite Fluidströmung (F2) empfangen.

7. Verteilerstück (1) nach einem der vorhergehenden Ansprüche, wobei mindestens eine innere Wandfläche des durchgehenden Kanals (6) eine strukturierte Fläche besitzt.

8. Verteilerstück (1) nach Anspruch 2 und wahlweise nach einem der Ansprüche 3 bis 7, wobei der Einlass-/Auslassabschnitt (3) erste Tragstrukturen (15) umfasst, wobei sich jede erste Tragstruktur (15) von dem Scheitelpunkt (9a, 10a) einer ersten hohlen Finne (9) oder einer zweiten hohlen Finne (10) in einer Richtung weg von dem Gabelungsabschnitt (5) erstreckt.

9. Verteilerstück (1) nach Anspruch 2 und wahlweise nach einem der Ansprüche 3 bis 8, wobei der Einlass-/Auslassabschnitt (3) zweite Tragstrukturen (16) umfasst, wobei sich jede zweite Tragstruktur (16) von der Fläche (9b, 9c; 10b, 10c) einer ersten hohlen Finne (9) oder einer zweiten hohlen Finne (10) in Richtung der Schnittstelle (I) erstreckt, wobei sich die zweite Tragstruktur (16) mit einer Wand eines durchgehenden Kanals (6) an der Schnittstelle (I) verbindet.

10. Verteilerstück (1) nach einem der vorhergehenden Ansprüche, wobei das Verteilerstück (1) mit Hilfe additiver Fertigung hergestellt wird, wobei der Einlass-/Auslassabschnitt (3) und der Gabelungsabschnitt (5) des Verteilerstücks (1) als ein einziges Teil hergestellt werden.

11. Wärmeaustauschsystem (17), das einen Fluid-zu-Fluid-Wärmeaustauschkörper (2) und mindestens ein Verteilerstück (1) nach einem der Ansprüche 1 bis 10 umfasst, wobei der Wärmeaustauschkörper (2) einen ersten Fluidweg (F10) und einen zweiten Fluidweg (F20) umfasst,
wobei das Verteilerstück (1) konfiguriert ist, jeweils eine Fluidströmung zu dem ersten Fluidweg (F10) und von dem zweiten Fluidweg (F20) zu lenken oder eine Fluidströmung von dem ersten Fluidweg (F10) und zu dem zweiten Fluidweg (F20) zu lenken.

12. Wärmeaustauschsystem (17) nach Anspruch 11, wobei das Verteilerstück (1) und/oder der Wärmeaustauschkörper (2) eine zumindest teilweise nicht geradlinige Form besitzen, so dass sich der erste Fluidweg (F10) des Verteilerstücks (1), der zweite Fluidweg (F2) des Verteilerstücks (1), der erste Fluidweg (F10) des Wärmeaustauschkörpers (2) und/oder der zweite Fluidweg (F20) des Wärmeaustauschkörpers (2) nicht geradlinig in mindestens einer Ebene erstrecken.

13. Verfahren zum Herstellen eines Verteilerstücks (1) oder eines Wärmeaustauschsystems (17), das einen Fluid-zu-Fluid-Wärmeaustauschkörper (2) und mindestens ein Verteilerstück (1) umfasst,
wobei das Verteilerstück (1) einen Einlass-/Auslassabschnitt (3) umfasst, der eine Anordnung von durchgehenden Schlitzen (4), einen Gabelungsabschnitt (5), der eine Matrix von durchgehenden Kanälen (6), die in mehreren Reihen und mehreren Spalten angeordnet sind, und ein Gehäuse (14), das den Einlass-/Auslassabschnitt (3) und den Gabelungsabschnitt (5) teilweise umschließt, umfasst,
wobei ein erster Teil (5a) des Gabelungsabschnitts (5) unmittelbar mit dem Einlass-/Auslassabschnitt (3) an einer Schnittstelle (I) derart verbunden ist, dass jeder durchgehende Schlitz (4) fluidtechnisch mit durchgehenden Kanälen (6) von mindestens zwei Reihen und mindestens zwei Spalten verbunden ist, und
ein zweiter Teil (5b) des Gabelungsabschnitts (5) derart konfiguriert ist, dass jeder durchgehende Kanal (6) der Matrix mindestens eine Partitionswand (7), die den durchgehenden Kanal (6) in mindestens zwei Unterkanäle (6a, 6b) unterteilt, umfasst, wobei jeder Unterkanal (6a, 6b) konfiguriert ist, sich mit einer Zelle (8) des Wärmeaustauschkörpers (2) fluidtechnisch zu verbinden,
wobei das Verfahren umfasst:
- Herstellen des Verteilerstücks (1) mit Hilfe additiver Fertigung und wahlweise
- Herstellen des Wärmeaustauschkörpers (2) mit Hilfe additiver Fertigung.

14. Verfahren nach Anspruch 13, wobei das Verfahren umfasst:
- Herstellen des Einlass-/Auslassabschnitts (3) des Verteilerstücks (1), startend von einem ersten Ende des Einlass-/Auslassabschnitts (3),
- Herstellen des Gabelungsabschnitts (5) des Verteilerstücks (1) von einem freien Ende des Einlass-/Auslassabschnitts (3) und wahlweise
- Herstellen des Wärmeaustauschkörpers (2) von einem freien Ende des Gabelungsabschnitts (5).

15. Verfahren nach Anspruch 14, das ferner umfasst, ein zweites Verteilerstück (1) mit Hilfe additiver Fertigung herzustellen, wobei das Verfahren umfasst
- Herstellen eines Gabelungsabschnitts (5) des zweiten Verteilerstücks (1), startend von einem freien Ende des Wärmeaustauschkörpers (2) und
- Herstellen eines Einlass-/Auslassabschnitts (3) des zweiten Verteilerstücks (1), startend von einem freien Ende des Gabelungsabschnitts (5).

16. Verfahren nach Anspruch 14 oder 15, das ferner einen Schritt des Herstellens einer ersten Tragstruktur (15) umfasst, die konfiguriert ist, die Herstellung des Einlass-/Auslassabschnitts (3) des Verteilerstücks (1) zu erleichtern.

17. Verfahren nach einem der Ansprüche 14 bis 16, das ferner einen Schritt des Herstellens einer zweiten Tragstruktur (16) umfasst, die konfiguriert ist, die Herstellung des Gabelungsabschnitts (5) startend von dem Einlass-/Auslassabschnitt (3) zu erleichtern.

## Revendications

1. Collecteur (1) configuré pour diriger un écoulement de fluide vers et depuis un corps d'échangeur de chaleur (2), dans lequel ledit collecteur (1) comprend :
- une section d'entrée/sortie (3) comprenant un réseau de fentes traversantes (4),
- une section de ramification (5) comprenant une matrice de canaux traversants (6) agencés en une pluralité de rangées et une pluralité de colonnes, et
- un boîtier (14) renfermant partiellement ladite section d'entrée/sortie (3) et ladite section de ramification (5),
-- une première partie (5a) de ladite section de ramification (5) étant directement connectée à ladite section d'entrée/sortie (3) au niveau d'une interface (I), de telle sorte que chaque fente traversante (4) soit connectée de manière fluidique à des canaux traversants (6) à partir d'au moins deux rangées et au moins deux colonnes,
-- une seconde partie (5b) de ladite section de ramification (5) étant configurée de telle sorte que chaque canal traversant (6) de ladite matrice comprenne au moins une paroi de séparation (7) divisant ledit canal traversant (6) en au moins deux sous-canaux (6a, 6b), chaque sous-canal (6a, 6b) étant configuré pour se connecter de manière fluidique à une cellule (8) dudit corps d'échangeur de chaleur (2).

2. Collecteur (1) selon la revendication 1, dans lequel ladite section d'entrée/sortie (3) comprend une pluralité de premières ailettes creuses parallèles (9) agencées dans une partie d'entrée (3a) de ladite section d'entrée/sortie (3), chaque paire de premières ailettes creuses adjacentes (9) étant séparée par une fente traversante (4), et
une pluralité de secondes ailettes creuses parallèles (10) agencées dans une partie de sortie (3b) de ladite section d'entrée/sortie (3), chaque paire de secondes ailettes creuses adjacentes (10) étant séparée par une fente traversante (4),
lesdites premières ailettes creuses (9) et lesdites secondes ailettes creuses (10) étant décalées de telle sorte qu'un sommet (9a) de chaque première ailette creuse (9) s'aligne avec une fente traversante (4) de ladite partie de sortie (3b), et un sommet (10a) de chaque seconde ailette creuse (10) s'aligne avec une fente traversante (4) de ladite partie d'entrée (3a).

3. Collecteur (1) selon la revendication 2, dans lequel chaque première ailette creuse (9) et chaque seconde ailette creuse (10) comprend deux surfaces ou plus au moins partiellement arquées (9b, 9c ; 10b, 10c), lesdites deux surfaces ou plus (9b, 9c ; 10b, 10c) étant interconnectées au niveau dudit sommet (9a, 10a), chaque surface (9b, 9c, 10b, 10c) formant une limite d'une fente traversante (4).

4. Collecteur (1) selon la revendication 2 ou 3, dans lequel ladite partie d'entrée (3a) et ladite partie de sortie (3b) sont séparées par une structure de division d'écoulement (11), lesdites premières ailettes creuses (9) et lesdites deuxièmes ailettes creuses (10) étant interconnectées avec ladite structure de division d'écoulement (11),
l'interconnexion entre chaque seconde ailette creuse (10) et ladite structure de division d'écoulement (11) comprenant une ouverture (12), ladite ouverture (12) permettant un premier écoulement de fluide (F1) entre un intérieur de ladite seconde ailette creuse (10) et une fente traversante (4) de ladite partie d'entrée (3a), et
l'interconnexion entre chaque première ailette creuse (9) et ladite structure de division d'écoulement (11) comprenant une ouverture (13), ladite ouverture (13) permettant un second écoulement de fluide (F2) entre un intérieur de ladite première ailette creuse (9) et une fente traversante (4) de ladite partie de sortie (3b).

5. Collecteur (1) selon l'une quelconque des revendications 2 à 4, dans lequel chaque première et seconde ailettes creuses (9, 10) est configurée de telle sorte que ledit intérieur desdites première et seconde ailettes creuses (9, 10) s'élargisse depuis ledit sommet (9a, 10a) dans une direction vers ladite section de ramification (5) et vers ladite structure de division d'écoulement (11).

6. Collecteur (1) selon la revendication 4 ou 5, dans lequel les canaux traversants (6) d'une certaine colonne sont agencés de telle sorte que chaque deuxième canal reçoit ledit premier écoulement de fluide (F1) et les canaux restants de ladite colonne reçoivent ledit second écoulement de fluide (F2), et
dans lequel les canaux traversants (6) d'une rangée sont agencés de telle sorte que chaque deuxième canal reçoit ledit premier écoulement de fluide (F1) et les canaux restants de ladite rangée reçoivent ledit second écoulement de fluide (F2).

7. Collecteur (1) selon l'une quelconque des revendications précédentes, dans lequel au moins une surface de paroi intérieure dudit canal traversant (6) présente une surface structurée.

8. Collecteur (1) selon la revendication 2 et facultativement l'une quelconque des revendications 3 à 7, dans lequel ladite section d'entrée/sortie (3) comprend des premières structures de support (15), chaque première structure de support (15) s'étendant depuis le sommet (9a, 10a) d'une première ailette creuse (9) ou d'une seconde ailette creuse (10) dans une direction s'éloignant de ladite section de ramification (5).

9. Collecteur (1) selon la revendication 2 et facultativement l'une quelconque des revendications 3 à 8, dans lequel ladite section d'entrée/sortie (3) comprend des secondes structures de support (16), chaque seconde structure de support (16) s'étendant depuis la surface (9b, 9c ; 10b, 10c) d'une première ailette creuse (9) ou d'une seconde ailette creuse (10) dans une direction vers ladite interface (1), ladite seconde structure de support (16) s'interconnectant avec une paroi d'un canal traversant (6) au niveau de ladite interface (I).

10. Collecteur (1) selon l'une quelconque des revendications précédentes, dans lequel ledit collecteur (1) est fabriqué au moyen d'une fabrication additive, ladite section d'entrée/sortie (3) et ladite section de ramification (5) dudit collecteur (1) étant fabriquées en une seule pièce.

11. Système d'échangeur de chaleur (17) comprenant un corps d'échangeur de chaleur fluide à fluide (2) et au moins un collecteur (1) selon l'une quelconque des revendications 1 à 10, ledit corps d'échangeur de chaleur (2) comprenant un premier trajet de fluide (F10) et un second trajet de fluide (F20), ledit collecteur (1) étant configuré pour diriger un écoulement de fluide vers ledit premier trajet de fluide (F10) et depuis ledit second trajet de fluide (F20), ou pour diriger un écoulement de fluide depuis ledit premier trajet de fluide (F10) et vers ledit second trajet de fluide (F20), respectivement.

12. Système d'échangeur de chaleur (17) selon la revendication 11, dans lequel ledit collecteur (1) et/ou ledit corps d'échangeur de chaleur (2) présente une forme au moins partiellement non linéaire, de telle sorte que le premier trajet de fluide (F10) dudit collecteur (1), le second écoulement de fluide (F2) dudit collecteur (1), ledit premier trajet de fluide (F10) dudit corps d'échangeur de chaleur (2), et/ou ledit second trajet de fluide (F20) dudit corps d'échangeur de chaleur (2) s'étendent de manière non linéaire dans au moins un plan.

13. Procédé de fabrication d'un collecteur (1) ou d'un système d'échangeur de chaleur (17) comprenant un corps d'échangeur de chaleur fluide à fluide (2) et au moins un collecteur (1),
ledit collecteur (1) comprenant une section d'entrée/sortie (3) comprenant un réseau de fentes traversantes (4), une section de ramification (5) comprenant une matrice de canaux traversants (6) agencés en une pluralité de rangées et une pluralité de colonnes, et un boîtier (14) renfermant partiellement ladite section d'entrée/sortie (3) et ladite section de fourche (5),
une première partie (5a) de ladite section de ramification (5) étant directement connectée à ladite section d'entrée/sortie (3) au niveau d'une interface (I) de telle sorte que chaque fente traversante (4) soit connectée de manière fluidique à des canaux traversants (6) à partir d'au moins deux rangées et au moins deux colonnes, et
une seconde partie (5b) de ladite section de ramification (5) étant configurée de telle sorte que chaque canal traversant (6) de ladite matrice comprenne au moins une paroi de séparation (7) divisant ledit canal traversant (6) en au moins deux sous-canaux (6a, 6b), chaque sous-canal (6a, 6b) étant configuré pour se connecter de manière fluidique à une cellule (8) dudit corps d'échangeur de chaleur (2),
dans lequel ledit procédé comprend les étapes consistant à :
- produire ledit collecteur (1) au moyen d'une fabrication additive, et facultativement
- produire ledit corps d'échangeur de chaleur (2) au moyen d'une fabrication additive.

14. Procédé selon la revendication 13, dans lequel ledit procédé comprend les étapes consistant à :
- produire ladite section d'entrée/sortie (3) dudit collecteur (1), à partir d'une première extrémité de ladite section d'entrée/sortie (3),
- produire ladite section dudit collecteur (5) dudit collecteur (1) à partir d'une extrémité libre de ladite section d'entrée/sortie (3), et, facultativement
- produire ledit corps d'échangeur de chaleur (2) à partir d'une extrémité libre de ladite section de ramification (5).

15. Procédé selon la revendication 14, comprenant en outre la production d'un second collecteur (1) au moyen d'une fabrication additive, ledit procédé comprenant les étapes consistant à
produire une section de ramification (5) dudit second collecteur (1), à partir d'une extrémité libre dudit corps d'échangeur de chaleur (2), et
produire une section d'entrée/sortie (3) dudit second collecteur (1), à partir d'une extrémité libre de ladite section de ramification (5).

16. Procédé selon la revendication 14 ou 15, comprenant en outre une étape de production d'une première structure de support (15) configurée pour faciliter la production de ladite section d'entrée/sortie (3) dudit collecteur (1).

17. Procédé selon l'une quelconque des revendications 14 à 16, comprenant en outre une étape consistant à produire une seconde structure de support (16) configurée pour faciliter la production de ladite section de ramification (5) à partir de ladite section d'entrée/sortie (3).
